# EUROPEAN PATENT SPECIFICATION

(11) **EP 3 754 054 B1**
(45) Date of publication and mention of the grant of the patent: **19.06.2024**
(21) Application number: 19168197.2
(22) Date of filing: 09.04.2019
(51) Int. Cl.: D01F 9/12, B29B 17/02, D01F 11/14, D01F 11/16, B29B 17/04, B29K 307/04, B29B 17/00, B29K 105/08, B32B 5/02, B32B 5/26, B29K 105/06

(54) **PREPARATION METHOD OF CARBON FIBER AND CARBON FIBER REINFORCED RESIN COMPOSITION**
HERSTELLUNGSVERFAHREN VON KOHLENSTOFFASERN UND KOHLENSTOFFFASERVERSTÄRKTE HARZZUSAMMENSETZUNG
PROCÉDÉ DE PRÉPARATION DE FIBRE DE CARBONE ET COMPOSITION DE RÉSINE RENFORCÉE PAR DES FIBRES DE CARBONE

(43) Date of publication of application: 23.12.2020
(73) Proprietor: AI-Carbon Co., Ltd., Hachinohe-shi, Aomori 039-2245 (JP)
(72) Inventor: KASAI, Yuki, HACHINOHE-SHI, Aomori 0392245 (JP); IJUIN, Noriaki, HACHINOHE-SHI, Aomori 0392245 (JP)
(74) Representative: Colombo, Stefano Paolo

(56) References cited:
- EP-A1- 3 178 874
- JP-A- 2001 172 426
- JP-A- 2013 107 973
- JP-A- 2013 249 386
- US-A1- 2017 350 040

## Description

### [Technical Field]

The present invention relates to methods for manufacturing a carbon fiber and for manufacturing a carbon fiber reinforced resin composition. More particularly, the present invention relates to methods for manufacturing a recycled carbon fiber and for manufacturing a carbon fiber reinforced resin composition.

### [Background Art]

A carbon fiber has attracted attention as a lightweight and high-strength material, and has been used as a carbon fiber composite material of a material combined using a binder such as a resin.

The carbon fiber composite materials include a carbon fiber reinforced plastic (CFRP) obtained by combining a carbon fiber and a resin, a carbon fiber reinforced cement (CFRC) including cement combined therein, and the like, and have been widely used for materials for aircraft and automobile, sporting goods, and the like. This leads up to the improvement of fuel efficiency due to weight reduction, and the like, and therefore the market is considered to increasingly expand hereafter. Meanwhile, the disposal of step excess materials or discarded materials has become a problem, leading to a study on a recycling technology of isolating and recovering a carbon fiber from a carbon fiber composite material.

However, a carbon fiber composite material is very stable and is difficult to decompose and reuse because of the stability. Currently, the recycling technology of discarded materials has not sufficiently established in terms of performances and cost. Accordingly, it is considered that, when the carbon fiber included in a discarded material can be recycled at a low cost and with the quality equivalent with that of a virgin carbon fiber, the market will expand in the future to various fields in which such carbon fibers have not been utilized heretofore. Further, the discarded materials to be subjected to a landfill or incineration disposal are also reduced in amount, and hence the environmental load is also reduced.

As the method for recycling a carbon fiber from a discarded material, a thermal decomposition method (PTL 1), a normal pressure dissolution method (PTL 2 to 4), an electrolysis method (PTL 5 and 6), or the like has been studied heretofore, but actually has not yet been practically well used because of the high cost and the insufficient performances.

[PTL 1] Japanese Patent Application Publication No. 2013-064219
[PTL 2] Japanese Patent Application Publication No. 2005-255835
[PTL 3] Japanese Patent Application Publication No. 2005-255899
[PTL 4] Japanese Patent Application Publication No. 2007-297641
[PTL 5] Japanese Patent No. 6044946
[PTL 6] Japanese Patent No. 6205510
US2017/350040 and EP3178874 disclose method of preparation of carbon fibers from a carbon fibre composite material.

### [Summary of Invention]

With the thermal decomposition method described in PTL 1, superheated steam is supplied, and high-temperature burning is performed at 400°C or more in a heating furnace, to thereby decompose a base material resin. With this method, the carbon fiber is deteriorated by the heat treatment, and the mechanical strength of the regenerated carbon fiber remains at 80% of that of a virgin carbon fiber. This is described in Example 1.

The normal pressure dissolution methods described in PTL 2 to 4 are each a method for dissolving the base material resin at around 200°C using a specific cracking catalyst, an alkali metal, and a specific organic solvent, and separating a carbon fiber. With the methods, thermal deterioration of the carbon fiber is less caused, equipment for solvent recovery, and the like, is necessary since an organic solvent is used, resulting in a higher manufacturing cost.

The electrolysis method described in PTL 5 requires a burning step at 400°C to 500°C as the pretreatment of electrolysis as with the thermal decomposition method (see Example 2). Further, in Example 4, the mechanical strength was measured, and the strength was slightly lower than that of the resin not including any carbon fiber. Thus, a sizing agent was required for improving the conformability with the resin.

PTL 6 is a method for obtaining a high-strength regenerated carbon fiber by a heat burning treatment within a specific condition and an electrolysis condition within a specific condition. However, in Example 2, the mechanical strength of the composite resin (No. 119 or 121) obtained by adding the regenerated carbon fiber (sample No. 37 or 38), which was subjected only to a heat treatment, to a PBT (polybutylene terephthalate) resin was lower than that of a virgin carbon fiber. The mechanical strength was improved by introducing a proper amount of a chemical functional group into the carbon fiber surface by the electrolysis after the heat treatment.

From the description of the Patent Literature, it is apparent that the mechanical strength of a carbon fiber or a composite material thereof is reduced by a heat treatment of CFRP at 400°C or more, or an electrolysis treatment under other conditions than proper conditions. Meanwhile, the method for performing a dissolution treatment at low temperatures using an organic solvent in order to avoid deterioration of the carbon fiber for the recycling treatment of CFRP requires solvent recovery equipment, a specific compound, and the like, resulting in a higher manufacturing cost.

Wide expansion of the use of a carbon fiber requires a recycled carbon fiber capable of being at a low cost and keeping the strength inherent in a carbon fiber. This incurs a demand for the development of a manufacturing method therefor.

Under such circumstances, it is an object of the present invention to provide a method for recovering and recycling a carbon fiber from a carbon fiber composite material (CFC) at a low cost without deteriorating the carbon fiber.

The present inventors have conducted various studies, have found a method capable of decomposing a resin without deteriorating a carbon fiber using acidic and alkaline aqueous solutions without heating CFC at high temperatures, and recovering only the carbon fiber, and have completed the present invention.

The present invention is as follows. According to claim 1, a method is described for manufacturing a carbon fiber, comprising: a step (1) of immersing a carbon fiber composite material (CFC) in an acidic aqueous solution at a temperature within the range of 50°C to 90°C to elute at least a part of the resin component of the CFC, to thereby obtain a substantially fibrous product; and a step (2) of stirring the substantially fibrous product obtained in the step (1) in an alkaline aqueous solution using a high-speed stirrer or a reciprocating rotary stirrer to elute at least a part of the resin component of the substantially fibrous product, to thereby obtain a fibrous product.

The present invention may further comprise the following;
The manufacturing method wherein the elution amount of the resin component in the step (1) falls within the range of 0.1 to 99.9 when the mass of the CFC before immersion is taken as 100.

The manufacturing method wherein the elution amount of the resin component in the step (2) falls within the range of 0.1 to 99.9 when the mass of the CFC before immersion is taken as 100.

The manufacturing method wherein a part of or the whole of the substantially fibrous product is fibrous.

The manufacturing method wherein the CFC is an uncured prepreg or a cured prepreg.

The manufacturing method wherein the CFC is an uncured prepreg and is immersed in the acidic aqueous solution until a part of the uncured prepreg is decomposed into a fibrous state in the step (1), to thereby obtain a substantially fibrous product.

The manufacturing method wherein the CFC is a cured prepreg, and is immersed in an acidic aqueous solution until the whole of the cured prepreg is decomposed into a fibrous state in step (1), to thereby obtain a substantially fibrous product.

The manufacturing method wherein the CFC is stacked uncured prepregs, the stacked uncured prepregs are subjected to an immersion treatment in an alkali aqueous solution for several minutes to several days, and the resulting treated prepregs are subjected to the step (1).

The manufacturing method wherein the high-speed stirring involves stirring in turbulence range of a Reynolds number of 10³ or more, and the reciprocating rotary stirring involves stirring in turbulence range of a Reynolds number of 10³ or more.

The manufacturing method further comprising a step (3) of immersing the fibrous product obtained in the step (2) in an acidic aqueous solution to elute further a resin component and/or a sizing agent deposited on the fibrous product, to thereby obtain a fibrous product improved in water dispersibility.

The manufacturing method further comprising a step (4) of subjecting the fibrous product obtained in the step (3) to dehydration and washing using an alkali washing solution, and removing the coloring component included in the fibrous product.

According to claim 12, a method is described for manufacturing a carbon fiber reinforced resin composition, comprising the steps of: manufacturing a carbon fiber by the method according to claim 1 and manufacturing a carbon fiber reinforced resin composition using the resulting carbon fiber.

The present invention may further comprise the following;
The manufacturing method wherein the carbon fiber reinforced resin composition is a resin composition comprising a carbon fiber, and a thermoplastic resin and/or a thermosetting resin, the carbon fiber reinforced resin composition comprising a carbon fiber (A) in an amount of 5 to 95 mass%, and a thermoplastic resin and/or a thermosetting resin (B) in an amount of 5 to 95 mass% when the total amount of the carbon fiber (A) and the thermoplastic resin and/or thermosetting resin (B) is taken as 100 mass%.

The manufacturing method wherein the thermoplastic resin is at least one selected from the group consisting of polyolefin-based resins, polyamide-based resins, styrene-based resins, polycarbonate-based resins, polyester-based resins, polyphenylene ether resins, polyphenylene sulfide resins, polyacetal resins, acrylic resins, and vinyl chloride resins.

The manufacturing method wherein the thermosetting resin is at least one selected from the group consisting of epoxy resins, phenol resins, melamine resins, urea resins, diallyl phthalate resins, and unsaturated polyester resins.

### [Advantageous Effects of Invention]

The present invention can provide a carbon fiber recycled by an unconventional new carbon fiber recycling method, and a resin composition having unconventional excellent mechanical physical properties by using the same.

### [Brief Description of Drawings]

[Fig. 1]

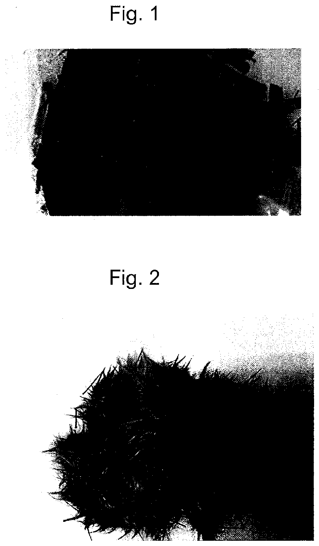

   Fig. 1 shows a photograph of a carbon fiber in a used tea leaf shape (sample No. 1) obtained by the present invention.
[Fig. 2]
   Fig. 2 shows a photograph of a carbon fiber in a wool shape (sample No. 4) obtained by the present invention.
[Fig. 3]

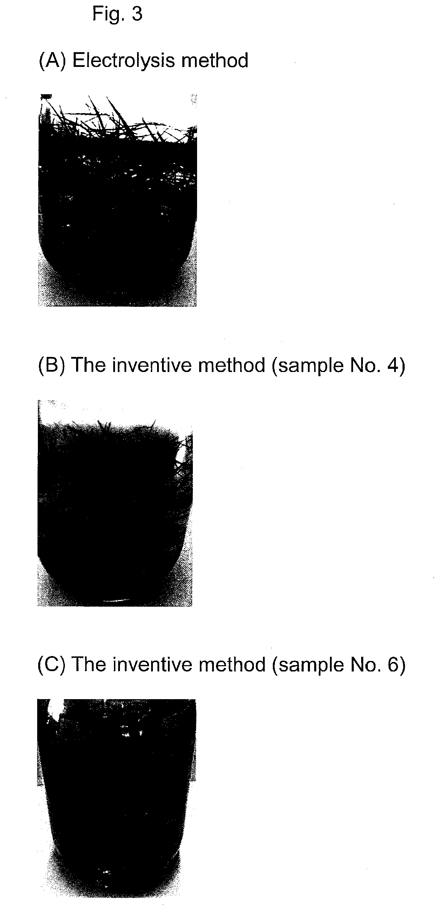

   Fig. 3 shows the dispersibility in water of the carbon fibers obtained by the present invention and the electrolysis method, (A) the electrolysis method, (B) the present method (sample No. 4), and (C) the present method (sample No. 6).
[Fig. 4]

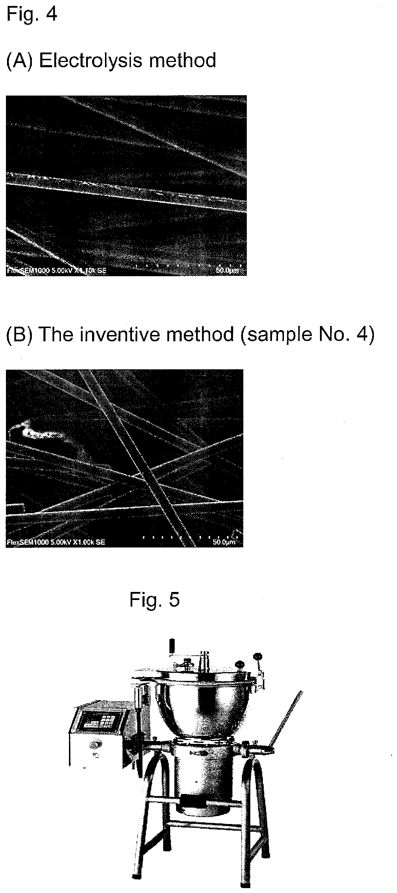

   Fig. 4 shows photographs by SEM of the carbon fibers obtained by the present invention and the electrolysis method, (A) the electrolysis method, and (B) the present method (sample No. 4).
[Fig. 5]
   Fig. 5 shows the outward appearance of a high-speed stirrer.
[Fig. 6]

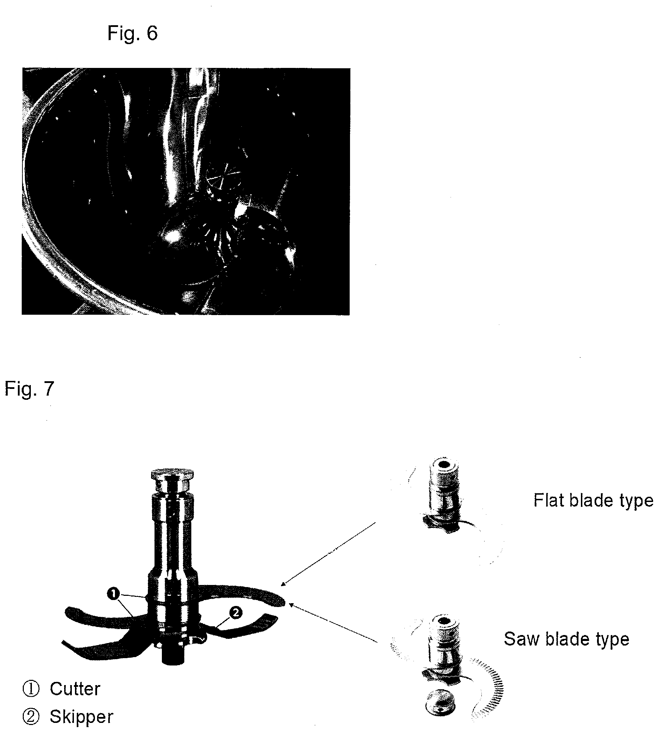

   Fig. 6 shows the inside of a high-speed stirrer.
[Fig. 7]
   Fig. 7 shows the shape of a stirring blade of a high-speed stirrer, with a flat blade mounted on a skipper.
[Fig. 8]

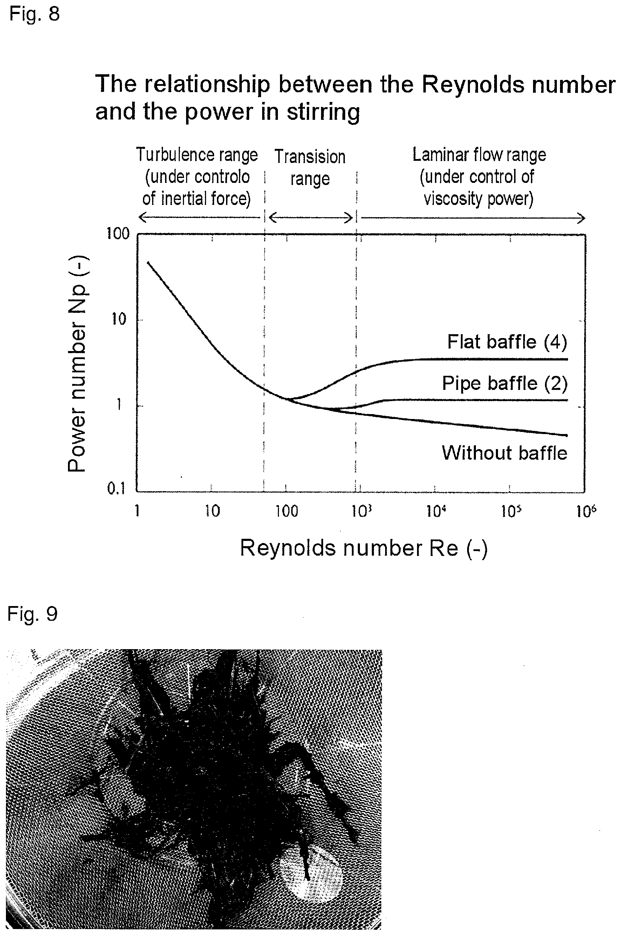

   Fig. 8 shows the relationship between the Reynolds number and the power in stirring.
[Fig. 9]
   Fig. 9 shows the outward appearance of the raw material before stirring treatment.
[Fig. 10]

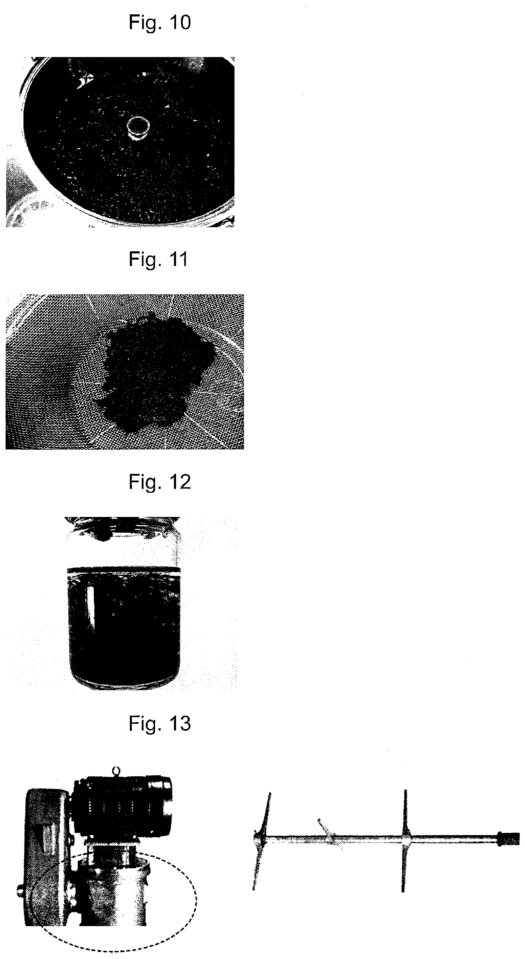

   Fig. 10 shows the outward appearance of a carbon fiber after high-speed stirring treatment.
[Fig. 11]
   Fig. 11 shows the outward appearance of a final product.
[Fig. 12]
   Fig. 12 shows a state in which a final product is dispersed in water.
[Fig. 13]
   Fig. 13 shows shapes of a reciprocating rotary stirrer and a stirring blade.

### [Description of Embodiments]

### [Manufacturing method of carbon fiber]

A method for manufacturing a carbon fiber of the present invention comprises a step (1) of immersing a CFC in an acidic aqueous solution at a temperature within the range of 50°C to 90°C to elute at least a part of the resin component of the CFC, to thereby obtain a substantially fibrous product; and
a step (2) of stirring the substantially fibrous product obtained in the step (1) in an alkaline aqueous solution using a high-speed stirrer or a reciprocating rotary stirrer for eluting at least a part of the resin component of the substantially fibrous product, to thereby obtain a fibrous product.

### Step (1)

A CFC is immersed in an acidic aqueous solution for eluting at least a part of the resin component of the CFC, to thereby obtain a substantially fibrous product. Although not particularly limited, the CFC is a composite material obtained by combining a carbon fiber and a thermosetting resin, and may be either an uncured prepreg before curing a thermosetting resin, or a cured prepreg. The uncured prepreg can be a product recovered as lumber remnants, defective products, or the like, which is generated in the process of manufacturing a CFC product. The cured prepreg may be a used CFC such as a carbon fiber reinforced plastic (CFRP), or lumber remnants, defective products or the like generated in the process of manufacturing. They are matters mainly burned or buried as a discarded material heretofore. An uncured prepreg and a cured prepreg can also be a matter in which prepregs are stacked.

The CFC to be subjected to the step (1) is not particularly limited on the shape, the dimensions, and the like, and is preferably previously cut or the like to a given dimension or smaller in view of ease of elution, or ease of operation of stirring or movement in a solution of the resin component of the CFC. However, when the dimension is made too small, the dimension (length) of the inherent carbon fiber is necessary to be made small. For this reason, the dimension is preferably appropriately determined in consideration of the dimension of the carbon fiber to be recovered. Practically, for example, a piece can have a dimension within the range of 0.2 to 10 cm per side. However, it is not intended that the dimension is limited to this range.

When the CFC is a stacked uncured prepreg, it is preferable that the stacked uncured prepreg is subjected to an alkali aqueous solution for several minutes to several days; and the resulting treated prepreg is then subjected to the step (1). In the case where the CFC is a stacked uncured prepreg waste material, it is effective for immersing the stacked uncured prepreg waste material in an alkali aqueous solution for several minutes to several days as a pretreatment prior to the step (1). The alkali aqueous solutions act on the interlayer adhesion between the stacked prepregs, to cause the prepregs to be easily released one by one. Examples of alkali may include a hydroxide, carbonate, hydrogen carbonate, sulfate, sulfite, nitrate, and the like of an alkali metal, a hydroxide, carbonate, hydrogen carbonate, sulfate, sulfite, nitrate, and the like of an alkaline-earth metal, and an amine compound. Examples of alkali metals may include lithium, sodium, potassium, and the like, and as alkaline-earth metals, mention may be made of beryllium, magnesium, calcium, and the like. Further, as amine compounds, mention may be made of dimethylamine, diethylamine, and the like. In consideration of the solubility in water, ease of availability, and the like, sodium salt or potassium salt is preferably used. In view of particularly good solubility of the resin, at least one or more of sodium hydrogen carbonate, sodium hydroxide, and sodium sulfite is particularly preferably used. The alkali aqueous solutions are each adjusted to a concentration of 0.1 to 10 M, and is used at a temperature within the range of 5°C to 80°C.

The acidic aqueous solution to be used in the step (1) is not particularly limited. As an acid, an organic acid, an inorganic acid, or a mixture thereof can be used. Examples of the organic acids may include formic acid, acetic acid, citric acid, and the like. Examples of an inorganic acid may include nitric acid, sulfuric acid, hydrochloric acid, and phosphoric acid. Among these acids, nitric acid is most preferable in view of the high elutability, low cost, and easy availability. By using sulfuric acid with nitric acid in combination, if required, it is possible to further enhance the elutability. The acidic aqueous solution can be appropriately determined in consideration of the kind or the treatment conditions (mainly, the treatment temperature and time) of the CFC to be treated.

The concentration of the acid in the acidic aqueous solution can be appropriately determined in consideration of the kind of the acid, the kind, the dissolution temperature, the dissolution time of the CFC, and the like, can be set, for example, within the range of 0.01 to 10 M, preferably within the range of 0.1 to 10 M, in particular preferably within the range of 1 to 10 M, and most preferably within the range of 2 to 8 M. The temperature of the acidic aqueous solution is set within the range of 50°C to 90°C because of the particular effectiveness in terms of the solubility of the resin.

When the CFC is an uncured prepreg, the thermosetting resin is before curing, and the decomposition by an acid and subsequent alkali (swelling and/or dissolution of the resin and/or the sizing agent) can be performed relatively easier. In the step (1), the CFC is preferably immersed in an acidic aqueous solution until a part of the uncured prepreg is decomposed into fibrous state, to thereby elute the resin component included in the CFC, so as to obtain a substantially fibrous product. This is because a composite material can be sufficiently decomposed into a fibrous state with the alkali aqueous solution in the step (2) when the composite material is decomposed by dissolving the resin and/or the sizing agent included in the CFC and/or swelling to a substantially fibrous product which is partially fibrous.

The elution amount of the resin component in the step (1) can fall within the range of, for example, 0.1 to 99.9, preferably within the range of 1 to 95, and more preferably within the range of 5 to 90 when the mass of the CFC before immersion is taken as 100.

When the CFC is a cured prepreg, the thermosetting resin has already been cured. Thus, such a CFC is more difficult to decompose in the subsequent decomposition procedure with an alkali than the uncured prepreg. In the step (1), the CFC is immersed in an acidic aqueous solution until the whole of the cured prepreg is decomposed into a fibrous state to be a substantially fibrous product, to thereby elute the resin component, to obtain a substantially fibrous product. The state in which the whole of the cured prepreg has been decomposed into a fibrous state can be judged by, for example, repeating washing with water after dissolution, and visually observing that the carbon fiber is in a wool shape. The decomposition of the whole of the cured prepreg into a fibrous state can be carried out by elongating the immersion time in the acidic aqueous solution even under the same concentration and temperature conditions as compared with the decomposition of the uncured prepreg. Further, by setting the concentration and the temperature of the acid higher, it is possible to shorten the immersion time.

The substantially fibrous product obtained in the step (1) of the present invention means a matter in which part of the CFC is made fibrous or a matter in which the whole of the CFC is made fibrous but still includes residues of the resin remained in the fibrous product. Even when the matter in this state is further immersed in an acidic aqueous solution for a long time, the residue of the resin and the like are difficult to be further removed.

### Step (2)

In the substantially fibrous product obtained in the step (1), a large amount of a resin residue is deposited around the carbon fiber. For this reason, in order to remove the resin residue and obtain a fibrous product fully made fibrous, it is necessary to perform stirring in an alkali aqueous solution using a high-speed stirrer and/or a reciprocating rotary stirrer. When the fiber length is 25 mm or less, it is preferable to mainly use a high-speed stirrer for defibrating short fibers. Meanwhile, when the fiber length is more than 25 mm, a fiber becomes more likely to get entangled with the stirring blade of the high-speed stirrer, and thus, a reciprocating rotary stirrer, which frequently repeats reciprocal rotation, is preferably used. Note that, in order to perform the treatment of the alkali aqueous solution in the step (2) effectively, washing with water may be repeatedly performed as the pretreatment.

The high-speed stirrer in the present invention is a stirrer having a stirring blade operating together with a high-speed motor in the inside thereof, and is used for dispersing and emulsifying the lumps of various solids and liquids. The shape of the stirring blade and the structure of the edge to be attached can be appropriately selected. The high-speed stirrer for use in the present invention can be a high-speed stirrer with a volume of 25 L to 200 L, and a power of 1.5 to 15 KW as shown in Fig. 5 or a stirring blade having the edge as shown in Fig. 6 to be mainly used for food products or food.

For the substantially fibrous product (Fig. 9) obtained in the step (1), a large amount of the dissolved resin is deposited and aggregated around the carbon fiber. Thus, for stirring, a general stirring blade may be insufficient in shearing force, and crushing of aggregate or defibration for uniformly defibrating fibers may not be performed. Therefore, it is preferable to use a stirring blade having a flat edge or a saw edge having a sharp edge with a length of a 20 to 50 cm, and a width of 5 to 8 cm according to the volume and the bottom surface diameter of the stirring tank. Note that, with a stirring blade having a sharp edge, a fiber may be cut according to the rotation rate. In this case, a stirring treatment is performed with a dispersion blade called a skipper, which is present at the bottom surface, without attaching an edge. When a high-speed stirrer is used, the preferable rotation rate is 200 rotations/min or more and 9000 rotations/min or less. At 200 rotations or more, the resin residue can be sufficiently removed. At 9000 rotations or less, a fiber will not be cut and shortened, and a fiber with a desirable fiber length can be obtained.

A reciprocating rotary stirrer is a stirrer capable of frequently performing reciprocal rotation of a stirring blade by a specific structural part (a broken line part of Fig. 13) connected with a motor. Selection of a frequency in conjunction with a current enables stirring at from rotations as low as 10 rotations/min or less to rotations as high as 250 rotations/min, and also causes a vertical stream. Accordingly, stirring of a high viscosity liquid is also easy. For a long fiber of 4 cm or more obtained in the present invention, with stirring due to rotations in the same direction, the fiber may get entangled with the stirring blade with rotation and stirring may be stopped due to cutting or entanglement of the fiber. In contrast, use of a reciprocating rotary stirrer can prevent such production trouble.

Examples of the stirring blade to be used may include inclined paddle, turbine type, inclined turbine type, curved turbine type, anchor type, ribbon type, paddle type, and propeller type. In the present invention, mainly, two or three paddle type or inclined paddle type blades are preferably attached to the stirring shaft for use because the fiber can be prevented from being cut. Further, for example, a stirring blade with a diameter of from 5 cm to 3 m can be attached according to the size of the stirring tank. Further, the working power varies according to the stirring tank volume and the solution viscosity, and is generally between 0.2 and 110 KW. The reciprocating rotary stirrer is available from, for example, Shimazaki Mixing Engineering Co., Ltd. in Japan.

The liquid viscosity in stirring in the alkaline aqueous solution of the step (2) is roughly close to the viscosity of water. Fig.8 shows the relationship between the Reynolds number and the power number in the fluid. With the stirring in the step (2), stirring is performed within the turbulence range of a Reynolds number of 10³ or more for both of high-speed stirring and reciprocating rotary stirring.

For the alkaline aqueous solution, examples thereof may include aqueous solutions containing alkali such as a hydroxide, carbonate, hydrogen carbonate, sulfate, sulfite, nitrate, or the like of an alkali metal, a hydroxide, carbonate, hydrogen carbonate, sulfate, sulfite, nitrate, or the like of an alkaline-earth metals, or an amine compound. Examples of the alkali metals may include lithium, sodium, potassium, and the like, and examples of the alkaline-earth metals may include beryllium, magnesium, calcium, and the like. Further, examples of amine compounds may include dimethylamines, diethylamines, and the like. In consideration of the solubility in water, ease of availability, and the like, sodium or potassium is preferably used. Because of being particularly good in terms of solubility of the resin, at least one or more of sodium hydrogen carbonate, sodium hydroxide, and sodium sulfite is in particular preferably used.

The concentration of alkali in the alkaline solution can be appropriately determined in consideration of the kind of alkali, the kind of the CFC, the state, the dissolution temperature, the dissolution time of the substantially fibrous product, and the like, and, for example, can be set within the range of 0.01 to 10 M, and preferably falls within the range of 0.1 to 10 M. Note that 10% NaOH is 2.5 M. The temperature of the alkaline solution during dissolution can be set within the range of 5°C to 100°C, and preferably falls within the range of 20°C to 80°C because of being particularly effective in terms of the solubility of the resin.

The elution amount of the resin component in the step (2) falls, for example, within the range of 0.1 to 99.9, preferably within the range of 1 to 95, and more preferably 5 to 90 when the mass of the CFC before immersion is taken as 100.

The manufacturing method of the present invention can further comprise a step (3) of immersing the fibrous product obtained in the step (2) in an acidic aqueous solution for further eluting the resin component and/or the sizing agent deposited on the fibrous product, and the like, to thereby obtain a fibrous product having an improved water dispersibility. As a result, the resin component and/or the sizing agent deposited on the fibrous product can be reduced, and the water dispersibility can be improved.

For the fibrous product obtained in the step (2) or (3), the deposition amount of the resin is preferably less than 1 mass% (the carbon fiber content is more than 99 mass%), and more preferably 0.1 mass% or less. However, this is not intended to be exclusive. The conditions of the steps (1) to (3) (the kind, the concentration, the temperature, and the time of the acid of the acidic aqueous solution of the step (1), the kind, the concentration, the temperature, and the time of the alkali of the alkaline aqueous solution of the step (2), the necessity of adoption of the step (3), and the kind, the concentration, the temperature, and the time of the acidic aqueous solution of the step (3)) are appropriately adjusted so that the deposition amount of the resin falls within the foregoing range.

### Step (4)

The carbon fiber obtained in the step (2) or (3) includes a large amount of a colored solution, and may swell according to the conditions. In this case, it is preferable to perform dehydration and washing using various dehydrators, washers, and the like, and then to perform neutralization treatment, neutralization treatment, washing, and drying. Further, if required, washing may be performed repeatedly.

For the desolvation treatment and the drainage treatment after neutralization of the dissolved carbon fiber, and the dehydration after washing of fiber, a centrifugal separator, a pressure press, a screw press, a belt press, a pressure filtration filter, a dryer of high-speed stirring or the like can be used alone, or in combination of a plurality thereof. At that time, the base material resin in the composite material is partially or fully separated by the shearing force during the treatment, or the like. Then, a carbon fiber can be obtained by the proper separating treatments mentioned above.

As the neutralization treatment and the washing method after dehydration and washing with various dehydrators, washers, and the like, it is preferable to perform neutralization with at least one or more of aqueous solutions of sodium sulfite, sodium hydrogen carbonate, and sodium carbonate, followed by washing with water. By the dehydration and washing with various dehydrators, washers, and the like, and neutralization with sodium sulfite or the like, and washing with water, it is possible to obtain a high-quality carbon fiber that is free of a resin residue on the surface thereof, and is also free of a colored solution.

The carbon fiber manufactured by the method of the present invention can be used as the raw material for CFC as a recycled carbon fiber. Particularly, the carbon fiber manufactured by the method of the present invention has good dispersibility in water. For this reason, paper making can be performed as with the manufacturing method of a wet nonwoven fabric, and a carbon fiber sheet can be manufactured. Further, a carbon fiber can also be coated by being dispersed in an adhesive or a pressure-sensitive adhesive, an ink, a paint, or the like.

### [Manufacturing method of carbon fiber reinforced resin composition]

The manufacturing method of a carbon fiber reinforced resin composition of the present invention comprises a step of manufacturing a carbon fiber by the method of the present invention described above, and a step of manufacturing a carbon fiber reinforced resin composition using the resulting carbon fiber.

The step of manufacturing a carbon fiber is as described previously. Further, using the carbon fiber herein obtained, a carbon fiber reinforced resin composition is manufactured. For the manufacturing method of a carbon fiber reinforced resin composition using the carbon fiber, a known method can be used as it is. The carbon fiber reinforced resin composition can be manufactured by either method of a manufacturing method for making a resin into a composite form after manufacturing a carbon fiber sheet, and a method for mixing a resin and a carbon fiber, and then, forming the mixture into a sheet shape.

The carbon fiber manufactured by the method of the present invention can be used as the raw material for a CFC as it is as a recycled carbon fiber. However, the carbon fiber to be recovered is in a wool shape, and has poor convergence property. For this reason, the carbon fiber can be bound by adjusting the dissolution amount of the resin according to the intended purpose or using a converging material.

As the converging materials, polyurethane type, epoxy type, epoxy urethane type, modified acrylic type, modified olefin type, phenol type, specific resin type, or water-soluble polymer, and the like can be used according to the kind of the resin to be combined.

The carbon fiber reinforced resin composition to be manufactured is, for example, a resin composition comprising a carbon fiber and a thermoplastic resin and/or a thermosetting resin, and can be a carbon fiber reinforced resin composition comprising a carbon fiber (A) in an amount of 5 to 95 mass%, and a thermoplastic resin and/or a thermosetting resin (B) in an amount of 5 to 95 mass% when the total amount of the carbon fiber (A) and the thermoplastic resin and/or a thermosetting resin (B) is taken as 100 mass%.

The recovered carbon fiber obtained in the present invention has an excellent mechanical strength by the manufacturing method of the present invention. Further, the present inventors have found that the carbon fiber reinforced resin composition obtained using the recovered carbon fiber of the present invention has a practically sufficient mechanical strength, and becomes an excellent structural material. Namely, it has been shown that mixing the recovered carbon fiber of the present invention and a thermoplastic resin and/or a thermosetting resin can provide a carbon fiber reinforced resin composition (CFRTP) excellent in mechanical strength and practical characteristics, and preferable for various uses, and structural materials.

The preferable aspect of the carbon fiber reinforced resin composition of the present invention is a carbon fiber reinforced thermoplastic resin composition. For the carbon fiber reinforced thermoplastic resin composition, for example, the thermoplastic resin is at least one thermoplastic resin selected from the group consisting of a polypropylene resin, a polyamide-based resin, a styrene-based resin, a polycarbonate-based resin, a polyester resin, a polyphenylene ether resin, a polyphenylene sulfide resin, a polyacetal resin, an acrylic resin, and a vinyl chloride resin.

Typical examples of polyolefin-based resins may include homopolymers of α-olefin such as ethylene, propylene, butene-1, 3-methylbutene-1, 3-methylpentene-1, and 4-methylpentene-1, or copolymers thereof, copolymers with unsaturated monomers copolymerizable therewith, or the like. Typical examples thereof may include polyethylenes such as metallocene-based ethylene-α-olefin copolymers including high density polyethylene, intermediate density polyethylene, low density polyethylene, straight-chain low density polyethylene, ultra-high molecular weight polyethylene, an ethylene-vinyl acetate copolymer, an ethylene-ethyl acrylate copolymer, an ethylene-octene-1 copolymer, and the like, polypropylenes such as atactic polypropylene, syndiotactic polypropylene, isotactic polypropylene or a propylene-ethylene block copolymer or a random copolymer, and polymethylpentene-1.

The polyamide-based resin is not particularly limited so long as it has an amide bond in the repeating structure of the polymer. As the polyamide-based resin, a thermoplastic polyamide resin is preferable, and the polyamide-based resin may be homopolyamide and copolyamide obtained by polymerizing monomers such as lactam, aminocarboxylic acid and/or diamine, and dicarboxylic acid, and mixtures thereof. Specific examples thereof may include polycaproamide (nylon 6), polyhexamethylene adipamide (nylon 66), polytetramethylene adipamide (nylon 46), polyhexamethylene sebacamide (nylon 610), polyhexamethylene dodecamide (nylon 612), polyundecamethylene adipamide (nylon 116), polybis(4-aminocyclohexyl)methane dodecamide (nylon PACM12), polybis(3-methyl-4-aminocyclohexyl)methane dodecamide (nylon dimethyl PACM12), polynonamethylene terephthalamide (nylon 9T), polydecamethylene terephthalamide (nylon 10T), polyundecamethylene terephthalamide (nylon 11T), polyundecamethylene hexahydroterephthalamide (nylon 11T(H)), polyundecamide (nylon 11), polydodecamide (nylon 12), polytrimethyl hexamethylene terephthalamide (nylon TMDT), polyhexamethylene terephthalamide (nylon 6T), polyhexamethylene isophthalamide (nylon 6I), polymetaxylylene adipamide (nylon MXD6), and copolymerized products and mixtures thereof. Out of these, from the viewpoints of the formability and the surface appearance, nylon 6, nylon 66, nylon MXD6, nylon 9T, nylon 10T, and copolymerized polyamides thereof are preferable. Nylon 9T, nylon 10T, and nylon MXD6 are more preferable, and nylon 9T is in particular preferable. Further, the thermoplastic polyamide resins are also practically preferably used as a mixture according to the required characteristics such as the impact resistance and the forming processability.

Examples of the polycarbonate-based resin may include 4,4'-dihydroxy diaryl alkane-based polycarbonates. Specific examples thereof may include bisphenol A-based polycarbonate (PC), modified bisphenol A-based polycarbonate, and flame-retardant bisphenol A-based polycarbonate.

Examples of the styrene-based resin may include homopolymers such as styrene and α-methyl styrene or copolymers thereof, or copolymers with unsaturated monomers copolymerizable therewith. Specific examples of the styrene-based resin may include general polystyrene (GPPS), impact resistant polystyrene (HIPS), heat-resistant polystyrene (e.g., α-methyl styrene polymer or copolymer), acrylonitrile-butadiene-styrene copolymer (ABS), acrylonitrile-butadiene-styrene-α-methyl styrene copolymer (α-methyl styrene-based heat-resistantABS), acrylonitrile-butadiene-styrene-phenyl maleimide copolymer (phenyl maleimide-based e heat-resistantABS), acrylonitrile-styrene copolymer (AS), acrylonitrile-chlorinated polystyrene-styrene-based copolymer (ACS), acrylonitrile-ethylene propylene rubber-styrene copolymer (AES), acrylic rubber-acrylonitrile-styrene copolymer (AAS), or syndiotactic polystyrene (SPS). Alternatively, a styrene-based resin may be polymer-blended.

Examples of a polyester-based resin may include those resulting from polycondensation of aromatic dicarboxylic acid and alkylene glycol such as ethylene glycol, propylene glycol, or butylene glycol. Specific examples thereof may include polyethylene terephthalate (PET), polypropylene terephthalate (PPT), and polybutylene terephthalate (PBT).

Examples of a polyphenylene ether-based resin (PPE) may include homopolymers such as poly(2,6-dimethyl-1,4-phenylene) ether, and poly(2-methyl-6-ethyl-1,4-phenylene) ether. Those obtained by modifying these with a styrene-based resin can also be used.

A polyphenylene sulfide resin is a highly heat-resistant crystalline polymer having a structure in which benzene and sulfur are alternately bonded, and is more often used by being mixed with a filler such as glass fiber, carbon fiber, silica, or talk than being used alone.

Examples of a polyacetal resin (POM) may include homopolymer polyoxymethylene or formaldehyde-ethylene oxide copolymer resulting from trioxane and ethylene oxide.

Examples of an acrylic resin may include methacrylic acid ester, acrylic acid ester homopolymer or copolymers thereof, or copolymers with unsaturated monomers copolymerizable therewith. Examples of methacrylic acid ester, and acrylic acid ester monomers may include methyl, ethyl, n-propyl, isopropyl, or butyl ester of methacrylic acid or acrylic acid, and the like. Typical examples thereof may include methacrylic resin (PMMA). The thermoplastic resins may be used alone, or may be used in combination of two or more thereof.

Examples of a polyvinyl chloride-based resin may include vinyl chloride homopolymer and copolymers with unsaturated monomers copolymerizable with vinyl chloride. Specifically, a vinyl chloride-acrylic acid ester copolymer, a vinyl chloride-methacrylic acid ester copolymer, a vinyl chloride-ethylene copolymer, a vinyl chloride-propylene copolymer, a vinyl chloride-vinyl acetate copolymer, a vinyl chloride-vinylidene chloride copolymer, and the like. Alternatively, those obtained by chlorinating the polyvinyl chloride-based resins, and increasing the chlorine content can also be used.

Another aspect of the carbon fiber reinforced resin composition of the present invention is a carbon fiber reinforced thermosetting resin composition. Examples of the thermosetting resin may include at least one selected from the group consisting of an epoxy resin, a phenol resin, a melamine resin, urea resin, a diallyl phthalate resin, and an unsaturated polyester resin. The carbon fiber of the present invention is well dispersed in water, and, when it is subjected to paper making at a proper concentration, a wet nonwoven fabric, specifically, a thin carbon fiber sheet or carbon fiber paper can be obtained. When the resulting carbon fiber nonwoven fabric is mixed or impregnated with a thermosetting resin before curing, followed by curing by a heat or the like, a carbon fiber reinforced thermosetting resin composition having more excellent mechanical physical properties than ever can be obtained.

Further, to the carbon fiber reinforced resin composition of the present invention, fillers such as glass fiber, silica, and talk, and various flame retarders such as a phosphorus compound, a bromine compound, an antimony compound, a metal oxide, and a nitrogen compound can be added other than a thermoplastic resin according to the intended purpose. Further, other than the additives, various additives such as a flowability improver and a formability improver of a molten resin to be added to a general thermoplastic resin composition, and an impact resistance improver such as a rubber-based filler or a thermoplastic elastomer, and a matting agent for exerting the matting effect of the surface can be added in a proper amount.

### [Examples]

Below, the present invention will be further described in details based on examples. However, examples are illustrative of the present invention. It is not intended that the present invention is limited to the examples.

### Example 1

### Step (1)

As the pretreatment, an uncured prepreg of a CFC previously cut to a prescribed length was immersed in a 5% sodium hydrogen carbonate aqueous solution for 20 hours. 6 M nitric acid was placed in a reaction vessel, and heated to 60°C to 70°C. The uncured prepreg was added in an amount of 10 to 20 parts by mass to every 100 parts by mass of nitric acid, and heating and stirring were performed for 10 to 20 minutes. During stirring, the internal temperature was kept at 80°C or less. The reaction product was taken from nitric acid, and was immediately released in water, resulting in a brown carbon fiber resulting from dissolution of a part of an epoxy resin. Note that, in order to improve the dissolution, nitric acid and sulfuric acid may be mixed at a given ratio (Table 1-1, sample Nos. 1 and 2, Fig. 1). Further, a mixed acid of nitric acid/sulfuric acid was added to 30 parts of a cured prepreg, and the mixture was heated and immersed for 120 hours, resulting in a carbon fiber resulting from partial dissolution of an epoxy resin (Table 1-1, sample No. 3).

**[Table 1-1]**

| Sample No. | Carbon fiber reinforced plastic (CFRP) | | Acid dissolution step | | | | Shape of resulting decomposed matter |
|---|---|---|---|---|---|---|---|
| | Type and composition (wt ratio) | Addition amount (g) | 6 M nitric acid (g) | 4 M sulfuric acid (g) | Reaction tempera-t ure (°C) | Reaction time (hour) | |
| 1 | Uncured prepreg carbon fiber/epoxy resin = 60/40 Carbon fiber length in prepreg 6 mm | 10 | 100 | 0 | 80 | 0.2 | Partial dissolution |
| 2 | Uncured prepreg carbon fiber/epoxy resin = 60/40 Carbon fiber length in prepreg 30 mm | 20 | 120 | 40 | 80 | 1 | Same as above |
| 3 | Cured prepreg carbon fiber/epoxy resin = 60/40 50 mm | 30 | 120 | 40 | 80 | 120 | Same as above |

### Step (2)

Then, sample Nos. 1 to 3 of Table 1-1 were subjected to the stirring treatment and the alkaline aqueous solution treatment shown in Table 1-2. The stirring method and the alkali aqueous solution treatment shown in Table 1-2 provided a carbon fiber in a fiber-opened wool shape resulting from dissolution of most of the epoxy resin (Table 1-2 and Fig. 2).

### Stirring treatment in alkali aqueous solution after dissolution by acid,

The sample 1 with a fiber length of 6 mm, and subjected to an acid treatment in the step (1) was subjected to high-speed stirring in an alkaline aqueous solution using a high-speed stirrer manufactured by Aicohsha Mfg. Co., Ltd. (trade name Cutter Mixer model AC-25S stirring motor: 1.5 to 3 KW) for 1 minute, resulting in a sample 4. Further, the sample 2 with a fiber length of 30 mm, and the sample 3 with a fiber length of 50 mm were subjected to reciprocating rotary stirring using a reciprocating rotary stirrer (AP02 type manufactured by Shimazaki Mixing Engineering Co., Ltd.) for 5 minutes, to obtain samples 5 and 6.

**[Table 1-2]**

| Sample No. | Sample contents and addition amount (g) | Alkali dissolution step | | | |
|---|---|---|---|---|---|
| | | Stirring method and rotation rate | 10% sodium hydroxide (g) | 5% sodium hydrogen carbonate (g) | 10% sodium sulfite (g) |
| 4 | 10 g of 1 | High-speed stirrer 3000 rotations/min | 100 | 0 | 0 |
| 5 | 10 g of 2 | Reciprocating rotary stirrer 200 rotations/min | 90 | 10 | 0 |
| 6 | 10 g of 3 | Reciprocating rotary stirrer 80 rotations/min | 80 | 0 | 20 |

| Sample No. | Resulting dissolved matter | Carbon fiber property | | |
|---|---|---|---|---|
| | Shape | Fiber length distribution | Resin residue on surface | Fiber dispersibility in water |
| 4 | Fibrous | No change | Slightly present | Good |
| 5 | Same as above | Same as above | Same as above | Same as above |
| 6 | Same as above | Same as above | Same as above | Same as above |

As indicated with the results shown in Table 1-2, most of the epoxy resin included in the uncured prepreg (Nos. 1 and 2) and the cured prepreg (No. 3) could be dissolved by the high-speed stirring treatment in an alkaline aqueous solution. A resin residue was slightly observed on the carbon fiber surface. The sample after high-speed stirring by an alkali treatment is shown in Fig. 10.

**[Table 1-3]**

| Step (3) sulfuric acid treatment after stirring treatment in alkali aqueous solution | | | | |
|---|---|---|---|---|
| Sample No. | Acid immersion treatment | Shape of resulting dissolved matter | Resin residue on carbon fiber surface | Fiber dispersibility in water |
| | 40% Sulfuric acid (g) | | | |
| 4 | 100 | Fibrous | None | Better |
| 5 | 100 | Same as above | None | Better |
| 6 | 100 | Same as above | None | Better |

As indicated by the results shown in Table 1-3, the carbon fiber formed into a wool shape due to gradual elution of the resin component using nitric acid, then sodium hydroxide was further immersed in dilute sulfuric acid. Accordingly, the undissolved epoxy resin and sizing agent were eluted. As a result, it was possible to remove the resin residue slightly observed on the carbon fiber surface.

### Dehydration and washing of carbon fiber

The carbon fiber obtained by the present method may include a large amount of a colored solution and swell according to the conditions. Table 1-4 shows the defects of dehydration and washing after the step (3).

**[Table 1-4]**

| Sample No. | Sample | Dehydration treatment method | Washing solution | Coloring of carbon fiber water dispersion after dehydration treatment | Resin residue on carbon fiber surface | Fiber dispersibility in water |
|---|---|---|---|---|---|---|
| 7 | Sample No. 1 which has gone through up to step (3) 50 Kg | Continuous centrifugal dehydrator | 5% sodium sulfite aqueous solution | None | None | Very good |
| 8 | Sample No. 2 which has gone through up to step (3) 50 Kg | Same as above | 10% sodium hydrogen carbonate aqueous solution | Same as above | Same as above | Same as above |
| 9 | Sample No. 3 which has gone through up to step (3) 50 Kg | Belt press | 10% sodium sulfite aqueous solution | Same as above | Same as above | Same as above |

The colored solution included in the carbon fiber was fully removed by the dehydration and washing treatments after the step (3), and the fiber dispersibility in water became very good.

### Comparative example

The results obtained by performing the alkaline aqueous solution treatment and the treatment outside the range of conditions described in the present specification after the acid treatment of the step (1) are shown in Table 1-5.

**[Table 1-5]**

| Without alkali treatment or insufficient stirring | | | | | |
|---|---|---|---|---|---|
| Sample No. | Sample contents and addition amount (g) after acid dissolution step | Alkali dissolution step | | | |
| | | Stirring method and rotation rate | 10% sodium hydroxide (g) | 5% sodium hydrogen carbonate (g) | 10% sodium sulfite (g) |
| 10 | 10g of 1 | High-speed stirrer 3000 rotations/min | 0 | 0 | 0 |
| 11 | 10 g of 2 | Reciprocating rotary stirrer 200 rotations/min | 0 | 0 | 0 |
| 12 | 10 g of 3 | Reciprocating rotary stirrer 80 rotations/min | 0 | 0 | 0 |
| 13 | 10g of 1 | High-speed stirrer 180 rotations/min | 100 | 0 | 0 |
| 14 | 10g of 1 | High-speed stirrer 10000 rotations/min | 100 | 0 | 0 |
| 15 | 10 g of 2 | Reciprocating rotary stirrer 35 rotations/min | 90 | 10 | 0 |
| 16 | 10 g of 3 | Reciprocating rotary stirrer 35 rotations/min | 80 | 0 | 20 |

| Sample No. | Resulting dissolved matter | Carbon fiber property | | | |
|---|---|---|---|---|---|
| | Shape | Fiber length distribution | Resin residue on surface | Fiber dispersibility in water | |
| 10 | Undissolved present | No change | Present (large amount) | Very bad | |
| 11 | Same as above | Same as above | Same as above | Same as above | |
| 12 | Same as above | Same as above | Same as above | Same as above | |
| 13 | Same as above | Same as above | Slightly present | Insufficient dispersion | |
| 14 | Fibrous | A large amount of short fiber generated | None | Good | |
| 15 | Undissolved present | No change | Present | Insufficient dispersion | |
| 16 | Same as above | Same as above | Same as above | Same as above | |

For the sample Nos. 10 to 12 of Table 1-5, the treatment with an alkaline aqueous solution after the acid treatment of the step (1) was not performed. Accordingly, undissolved parts remained. Further, the amount of the resin residue on the carbon fiber surface was large, and the fiber dispersibility in water was also very bad. Whereas, for the sample Nos. 13, 15, and 16, stirring was insufficient. Accordingly, the dissolved part remained. Further, the amount of the resin residue on the carbon fiber surface was large, and the fiber dispersibility in water was also very bad. Further, for the sample No. 14, the rotation rate during stirring was high, so that the fiber was cut, and a large amount of short fibers were generated.

### Comparative example

**[Table 1-6]**

| Results of cases without dehydration treatment or without washing treatment after the step (3) | | | | | | |
|---|---|---|---|---|---|---|
| Sample No. | Sample | Dehydration treatment method | Washing solution | Carbon fiber slurry coloring after dehydration treatment | Resin residue on carbon fiber surface | Fiber dispersibility in water |
| 17 | Sample No. 1 which has gone through up to step (3) 50 Kg | None | None | Present (dark yellow) | None | Better |
| 18 | Sample No. 2 which has gone through up to step (3) 50 Kg | Continuous centrifugal dehydrator | None | Slightly present | Same as above | Same as above |
| 19 | Sample No. 3 which has gone through up to step (3) 50 Kg | Belt press | None | Slightly present | Same as above | Same as above |

Table 1-6 shows the results of the sample Nos. 17 and 18, for which the dehydration treatment was not performed after completion of the step (3) (No. 17), or a washing solution was not used (Nos. 18 and 19). For No. 17, the resulting carbon fiber was dispersed in water, and the dispersion solution was colored in dark yellow, and for Nos. 18 and 19, coloring in yellow was caused.

### Comparative example

### Comparison with other manufacturing methods

In accordance with the method described in PTL 1, a recovered carbon fiber was prepared by a thermal decomposition method. The results are shown in Table 1-7 (sample Nos. 20 to 23). Further, in accordance with the method described in PTL 5, a recycled carbon fiber was prepared by an electrolysis method. The results are shown in Table 1-8 (sample No. 24).

**[Table 1-7]**

| Thermal decomposition method | | | | | | | |
|---|---|---|---|---|---|---|---|
| Sample No. | Carbon fiber reinforced plastic (CFRP) | | Heating and burning | | Shape of resulting dissolved matter | Resin residue on carbon fiber surface | Dispersibility |
| | Type and composi-ti on (wt ratio) | Addition amount (g) | Reaction temperature (°C) | Reaction time (hour) | | | |
| 20 | Uncured prepreg carbon fiber/epox y resin = 60/40 | 10 | 400 | 1.5 | Fibrous | Present (large amount) | Bad |
| 21 | Uncured prepreg carbon fiber/epox y resin = 60/40 | 10 | 450 | 0.5 | Same as above | Present | Bad |
| 22 | Uncured prepreg carbon fiber/epox y resin = 60/40 | 10 | 500 | 1 | Same as above | Same as above | Bad |
| 23 | Cured prepreg carbon fiber/epox y resin = 60/40 | 10 | 550 | 0.5 | Same as above | Same as above | Bad |

**[Table 1-8]**

| Comparative example | | | | |
|---|---|---|---|---|
| Comparison with electrolysis method | | | | |
| Sample No. | Carbon fiber reinforced plastic (CFRP) | | Heating and burning | |
| | Type and composition (wt ratio) | Addition amount (g) | Reaction temperature (°C) | Reaction time (hour) |
| 24 | Uncured prepreg carbon fiber/epoxy resin = 60/40 | 10 | 450 | 0.5 |

| Sample No. | Electrolysis (anodic oxidation) | | | Resin residue on carbon fiber surface | Dispersibility |
|---|---|---|---|---|---|
| | Reaction time (hour) | Applied voltage (V) | Current density (A/m²) | | |
| 24 | 2 | 4.5 | 0.3 | Present | Bad |

### Physical property test 1 (dispersibility test)

The dispersibility of the carbon fiber in water was compared by the one obtained by stirring 1 g of carbon fiber in 1000 mL of water at 8000 rpm for 1 minute using a homogenizer.

Table 1-7 shows the burning conditions and the test results of the dispersibility of the carbon fiber samples (Nos. 20 to 23) obtained by a thermal decomposition method. The dispersibility of every sample was not good.

Table 1-8 shows the results of the conditions of electrolysis and the dispersibility of the carbon fiber sample (No. 24) obtained by an electrolysis method. Also in this case, the dispersibility was not good.

The carbon fiber obtained by the present method was more excellent in dispersibility than the carbon fibers by a thermal decomposition method and an electrolysis method (Fig. 3).

### Physical property test 2 (observation of surface resin residue)

The carbon fiber was observed by a scanning electron microscope, and whether the resin residue on the carbon fiber surface was present or not was confirmed.

Fig. 4 shows photographs of the surface conditions of the carbon fibers obtained by an electrolysis method and the present method. It was observed that the carbon fiber obtained by an electrolysis method included a resin left on the surface thereof. However, the surface condition of the carbon fiber obtained by the present method was very clean, and no residual resin was observed. Accordingly, full removal of the residual resin is considered to be effective for improving the dispersibility.

### Example 2

Using carbon fiber samples of Table 1-3 and Table 1-4, compositions with PP (carbon fiber composite material sheet) were formed with a paper-making method.

As a method for manufacturing a carbon fiber composite material sheet, the present carbon fibers (average fiber length 6 mm) in Table 1-3 and Table 1-4 and a PP fiber having a fiber length comparable thereto were first mixed, and dispersed in water, to thereby prepare a slurry for paper making including a solid content of 0.1 % to 3.0%. Then, as a dispersant, 0.00002 parts by weight of anionic sodium polyacrylate was added thereto. Then, the carbon fiber dispersion solution was deposited on the paper making surface using a hand-made paper machine with a mesh aperture of 0.3 mm, and was formed into a sheet. The resulting sheet was pressurized and heated (heated under pressure) at 5 MPa and 200°C, to obtain a carbon fiber composite material sheet. Then, a test piece for various mechanical measurements was formed.

### Example 3

Appropriate samples were selected from respective carbon fiber samples of Table 1-3 and Table 1-4, and compositions with respective thermoplastic resin shown in Table 2 were formed.

The formation was performed in the following manner: for 70 to 90 mass% thermoplastic resins, 10 to 30 mass% converged recovered carbon fibers were separately weighed. Then, with a biaxial extruder ZE40A manufactured by KraussMaffei Berstorff GmbH, both materials were kneaded and extruded under the temperature conditions of the melting temperature of a thermoplastic resin. Note that, for the sample including a large amount of carbon fiber added therein, the regenerated carbon fiber was added by side feeding from midway of the extruder screw. Further, for the sample, the sample bound to a length of about 1 to 3 cm was used.

The resulting pellet was subjected to injection molding under the optimum forming conditions for each thermoplastic resin using a F85 injection molding machine manufactured by Lockner Co., to thereby form a test piece for various mechanical measurements.

### Physical property test 3 (mechanical physical property test)

The results of the mechanical physical properties of respective thermoplastic resin compositions formed from Examples 2 and 3 are shown in Table 2 below (Example 2: sample Nos. 101 to 106, Example 3: sample Nos. 107 to 130).

The thermoplastic resin compositions formed using the carbon fibers obtained by the present method were compared with the carbon fibers obtained by an electrolysis method and a thermal decomposition method, and the resin compositions formed using an intermediate modulus virgin carbon fiber, and all the samples had a high strength.

**[Table 2]**

| Sample No. | Section | Resin | CF sample No. | CF addition amount (mass%) |
|---|---|---|---|---|
| 101 | Example | None | 7 | 25 |
| 102 | Same as above | Same as above | 8 | Same as above |
| 103 | Comparative example | Same as above | 20 | Same as above |
| 104 | Same as above | Same as above | 21 | Same as above |
| 105 | Same as above | Same as above | 24 | Same as above |
| 106 | Same as above | Same as above | Toray Industries, Inc., T010-006 | Same as above |
| 107 | Example | 66 Nylon | 4 | 30 |
| 108 | Same as above | Same as above | 5 | Same as above |
| 109 | Comparative example | Same as above | 22 | Same as above |
| 110 | Same as above | Same as above | 10 | Same as above |
| 111 | Same as above | Same as above | Toray Industries, Inc., TV14-006 | Same as above |
| 112 | Example | Polycarbonate (PC) | 4 | 10 |
| 113 | Same as above | Same as above | 5 | Same as above |
| 114 | Comparative example | Same as above | 23 | Same as above |
| 115 | Same as above | Same as above | 24 | Same as above |
| 116 | Same as above | Same as above | Toray Industries, Inc., TV14-006 | Same as above |
| 117 | Example | ABS | 4 | 20 |
| 118 | Comparative example | Same as above | 20 | Same as above |
| 119 | Example | PBT | 5 | Same as above |
| 120 | Comparative example | Same as above | 24 | Same as above |
| 121 | Example | Polyphenylene sulfite (PPS) | 6 | 15 |
| 122 | Comparative example | Same as above | 21 | Same as above |
| 123 | Example | Polyphenylene ether/polystyrene = 60/40 mass ratio | 4 | 25 |
| 124 | Comparative example | Same as above | 22 | Same as above |
| 125 | Example | Polyoxymethylene (polyacetal) | 6 | 10 |
| 126 | Comparative example | Same as above | 24 | Same as above |
| 127 | Example | Acrylic resin | 4 | 10 |
| 128 | Comparative example | Same as above | 20 | Same as above |
| 129 | Example | Vinyl chloride resin | 5 | 10 |
| 130 | Comparative example | Same as above | 23 | Same as above |

| Sample No. | Tensile break strength (MPa) | Flexural strength (MPa) | Flexural modulus (MPa) | CF preparation method contents | Resin residue on carbon fiber surface | Paper making suitability |
|---|---|---|---|---|---|---|
| 101 | 258 | 264 | 22,000 | the present invention | None | Good |
| 102 | 250 | 256 | 21,800 | Same as above | None | Good |
| 103 | 168 | 175 | 13,400 | Thermal decomposition method | Present | Bad |
| 104 | 159 | 167 | 12,900 | Same as above | Present | Bad |
| 105 | 225 | 228 | 17,900 | Electrolysis method | Present | Bad |
| 106 | 201 | 208 | 16,200 | Virgin | None | Good |
| 107 | 266 | 381 | 21,200 | The present invention | None | - |
| 108 | 276 | 375 | 21,900 | Same as above | None | - |
| 109 | 198 | 286 | 16,500 | Thermal decomposition method | Present | - |
| 110 | 205 | 302 | 17,700 | Outside the present invention | Present | - |
| 111 | 247 | 341 | 19,400 | Virgin | - | - |
| 112 | 118 | 163 | 7,100 | The present invention | None | - |
| 113 | 120 | 168 | 7,050 | Same as above | None | - |
| 114 | 86 | 114 | 4,860 | Thermal decomposition method | Present | - |
| 115 | 99 | 125 | 6,200 | Electrolysis method | Present | - |
| 116 | 95 | 122 | 6,100 | Virgin | - | - |
| 117 | 130 | 168 | 12,200 | The present invention | None | - |
| 118 | 91 | 124 | 9,800 | Thermal decomposition method | Present | - |
| 119 | 135 | 178 | 12,400 | The present invention | None | - |
| 120 | 121 | 163 | 11,600 | Electrolysis method | Present | - |
| 121 | 168 | 240 | 12,600 | The present invention | None | - |
| 122 | 117 | 169 | 10,300 | Thermal decomposition method | Present | - |
| 123 | 116 | 223 | 10,800 | The present invention | None | - |
| 124 | 88 | 121 | 7,500 | Thermal decomposition method | Present | - |
| 125 | 108 | 144 | 8,100 | The present invention | None | - |
| 126 | 94 | 132 | 7,900 | Electrolysis method | Present | - |
| 127 | 125 | 230 | 10,200 | The present invention | None | - |
| 128 | 89 | 136 | 6,700 | Thermal decomposition method | Present | - |
| 129 | 93 | 165 | 10,500 | The present invention | None | - |
| 130 | 62 | 102 | 6,800 | Thermal decomposition method | Present | - |

With the present method, a heat treatment at high temperatures is not performed. For this reason, the carbon fiber obtained by the present method is not deteriorated by a heat. Further, the discarded material of a high-modulus type carbon fiber is used. For this reason, a recycled carbon fiber can be obtained while keeping the high strength and at a low cost.

### [Industrial Applicability]

The present invention is useful for the technical field regarding a CFC.

## Claims

1. A method for manufacturing a carbon fiber, comprising: a step (1) of immersing a carbon fiber composite material (CFC) in an acidic aqueous solution at a temperature within the range of 50°C to 90°C to elute at least a part of the resin component of the CFC, to thereby obtain a substantially fibrous product; and a step (2) of stirring the substantially fibrous product obtained in the step (1) in an alkaline aqueous solution using a high-speed stirrer or a reciprocating rotary stirrer to elute at least a part of the resin component of the substantially fibrous product, to thereby obtain a fibrous product.

2. The manufacturing method according to claim 1, wherein the elution amount of the resin component in the step (1) falls within the range of 0.1 to 99.9 when the mass of the CFC before immersion is taken as 100.

3. The manufacturing method according to claim 1 or 2, wherein the elution amount of the resin component in the step (2) falls within the range of 0.1 to 99.9 when the mass of the CFC before immersion is taken as 100.

4. The manufacturing method according to any one of claims 1 to 3, wherein a part of or the whole of the substantially fibrous product is fibrous.

5. The manufacturing method according to any one of claims 1 to 4, wherein the CFC is an uncured prepreg or a cured prepreg.

6. The manufacturing method according to any one of claims 1 to 4, wherein the CFC is an uncured prepreg and is immersed in the acidic aqueous solution until a part of the uncured prepreg is decomposed into a fibrous state in the step (1), to thereby obtain a substantially fibrous product.

7. The manufacturing method according to any one of claims 1 to 4, wherein the CFC is a cured prepreg, and is immersed in an acidic aqueous solution until the whole of the cured prepreg is decomposed into a fibrous state in step (1), to thereby obtain a substantially fibrous product.

8. The manufacturing method according to any one of claims 1 to 4, wherein the CFC is stacked uncured prepregs, the stacked uncured prepregs are subjected to an immersion treatment in an alkali aqueous solution for several minutes to several days, and the resulting treated prepregs are subjected to the step (1).

9. The manufacturing method according to any one of claims 1 to 8, wherein the high-speed stirring involves stirring in turbulence range of a Reynolds number of 10³ or more, and the reciprocating rotary stirring involves stirring in turbulence range of a Reynolds number of 10³ or more.

10. The manufacturing method according to any one of claims 1 to 9, further comprising a step (3) of immersing the fibrous product obtained in the step (2) in an acidic aqueous solution to elute further a resin component and/or a sizing agent deposited on the fibrous product, to thereby obtain a fibrous product improved in water dispersibility.

11. The manufacturing method according to any one of claims 1 to 10, further comprising a step (4) of subjecting the fibrous product obtained in the step (3) to dehydration and washing using an alkali washing solution, and removing the coloring component included in the fibrous product.

12. A method for manufacturing a carbon fiber reinforced resin composition, comprising the steps of: manufacturing a carbon fiber by the method according to any one of claims 1 to 11; and manufacturing a carbon fiber reinforced resin composition using the resulting carbon fiber.

13. The manufacturing method according to claim 12, wherein the carbon fiber reinforced resin composition is a resin composition comprising a carbon fiber, and a thermoplastic resin and/or a thermosetting resin, the carbon fiber reinforced resin composition comprising a carbon fiber (A) in an amount of 5 to 95 mass%, and a thermoplastic resin and/or a thermosetting resin (B) in an amount of 5 to 95 mass% when the total amount of the carbon fiber (A) and the thermoplastic resin and/or thermosetting resin (B) is taken as 100 mass%.

14. The manufacturing method according to claim 13, wherein the thermoplastic resin is at least one selected from the group consisting of polyolefin-based resins, polyamide-based resins, styrene-based resins, polycarbonate-based resins, polyester-based resins, polyphenylene ether resins, polyphenylene sulfide resins, polyacetal resins, acrylic resins, and vinyl chloride resins.

15. The manufacturing method according to claim 13, wherein the thermosetting resin is at least one selected from the group consisting of epoxy resins, phenol resins, melamine resins, urea resins, diallyl phthalate resins, and unsaturated polyester resins.

## Patentansprüche

1. Verfahren zur Herstellung einer Kohlenstofffaser, umfassend:
einen Schritt (1) von Eintauchen eines Kohlenstofffaserverbundwerkstoffs (CFC) in eine saure wässrige Lösung bei einer Temperatur im Bereich von 50°C bis 90°C, um zumindest einen Teil der Harzkomponente des CFC zu eluieren, um dadurch ein im Wesentlichen faseriges Produkt zu erhalten; und einen Schritt (2) des Rührens des im Wesentlichen faserigen Produkts, das in Schritt (1) in einer alkalischen wässrigen Lösung unter Verwendung eines Hochgeschwindigkeitsrührers oder eines hin- und hergehenden Rotationsrührers erhalten wird, um mindestens einen Teil der Harzkomponente des im Wesentlichen faserigen Produkts zu eluieren, um dadurch ein faseriges Produkt zu erhalten.

2. Herstellungsverfahren nach Anspruch 1,
wobei die Elutionsmenge der Harzkomponente im Schritt (1) im Bereich von 0,1 bis 99,9 liegt, wenn die Masse des CFCs vor dem Eintauchen mit 100 angenommen wird.

3. Herstellungsverfahren nach Anspruch 1 oder 2,
wobei die Elutionsmenge der Harzkomponente im Schritt (2) im Bereich von 0,1 bis 99,9 liegt, wenn die Masse des CFCs vor dem Eintauchen mit 100 angenommen wird.

4. Herstellungsverfahren nach einem der Ansprüche 1 bis 3,
wobei das im Wesentlichen faserige Produkt zum Teil oder insgesamt faserig ist.

5. Herstellungsverfahren nach irgendeinem der Ansprüche 1 bis 4,
wobei das CFC ein ungehärtetes Prepreg oder ein gehärtetes Prepreg ist.

6. Herstellungsverfahren nach einem der Ansprüche 1 bis 4,
wobei das CFC ein ungehärtetes Prepreg ist und in die saure wässrige Lösung eingetaucht ist, bis ein Teil des ungehärteten Prepregs im Schritt (1) in einen faserigen Zustand zersetzt ist, um dadurch ein im Wesentlichen faseriges Produkt zu erhalten.

7. Herstellungsverfahren nach einem der Ansprüche 1 bis 4,
wobei das CFC ein ausgehärtetes Prepreg ist und in eine saure wässrige Lösung eingetaucht wird, bis das ausgehärtete Prepreg insgesamt im Schritt (1) in einen faserigen Zustand zersetzt ist, um dadurch ein im Wesentlichen faseriges Produkt zu erhalten.

8. Herstellungsverfahren nach einem der Ansprüche 1 bis 4,
wobei das CFC gestapelte, ungehärtete Prepregs sind, wobei die gestapelten ungehärteten Prepregs einer Tauchbehandlung in einer alkalischen wässrigen Lösung für mehrere Minuten bis mehrere Tage unterzogen werden, und die resultierenden behandelten Prepregs dem Schritt (1) ausgesetzt werden.

9. Herstellungsverfahren nach einem der Ansprüche 1 bis 8,
wobei das Hochgeschwindigkeitsrühren das Rühren im Turbulenzbereich von einer Reynolds-Zahl von 10³ oder mehr beinhaltet, und das hin- und hergehende Rotationsrühren das Rühren im Turbulenzbereich einer Reynolds-Zahl von 10³ oder mehr beinhaltet.

10. Herstellungsverfahren nach einem der Ansprüche 1 bis 9,
das weiter einen Schritt (3) des Eintauchens des in Schritt (2) erhaltenen Faserprodukts in eine saure, wässrige Lösung aufweist, um eine Harzkomponente und/oder ein Schlichtemittel weiter zu eluieren, das auf dem faserigen Produkt abgeschieden wird, um dadurch ein faseriges Produkt mit verbesserter Wasserdispergierbarkeit zu erhalten.

11. Herstellungsverfahren nach einem der Ansprüche 1 bis 10,
das weiterhin einen Schritt (4) aufweist, bei dem das fasrige Produkt, das im Schritt (3) erhalten wurde, zum Dehydrieren und Waschen ausgesetzt wird unter Verwendung einer alkalischen Waschlösung, und Entfernen der im faserigen Produkt enthaltenen Farbstoffkomponente.

12. Verfahren zur Herstellung einer kohlenstofffaserverstärkten Harzzusammensetzung,
welches die Schritte aufweist: Herstellen einer Kohlenstofffaser durch das Verfahren gemäß irgendeinem der Ansprüche 1 bis 11; und Herstellung einer kohlenstofffaserverstärkten Harzzusammensetzung unter Verwendung der resultierenden Kohlenstofffaser.

13. Herstellungsverfahren nach Anspruch 12,
wobei die kohlenstofffaserverstärkte Harzzusammensetzung eine Harzzusammensetzung ist, die eine Kohlenstofffaser enthält, und ein thermoplastisches Harz und/oder ein duroplastisches Harz, wobei die kohlenstofffaserverstärkte Harzzusammensetzung eine Kohlenstofffaser (A) in einer Menge von 5 bis 95 Masse-% aufweist und ein thermoplastisches Harz und/oder ein duroplastisches Harz (B) in einer Menge von 5 bis 95 Massen-% aufweist, wenn die Gesamtmenge der Kohlenstofffaser (A) und des thermoplastischen Harzes und/oder des duroplastischen Harzes (B) als 100 Masse-% angenommen werden.

14. Herstellungsverfahren nach Anspruch 13,
wobei das thermoplastische Harz mindestens eines ist, welches ausgewählt ist aus der Gruppe bestehend aus Harzen auf Polyolefinbasis, Harzen auf Polyamidbasis, Harzen auf Styrolbasis, Harzen auf Polycarbonatbasis, Harzen auf Polyesterbasis, Polyphenylenether-Harzen, Polyphenylensulfid-Harzen, Polyacetal-Harzen, Acryl-Harzen und Vinylchlorid-Harzen.

15. Herstellungsverfahren nach Anspruch 13, wobei das wärmehärtende Harz mindestens eines ist, welches ausgewählt ist aus der Gruppe bestehend aus EpoxidHarzen, Phenol-Harzen, Melamin-Harzen, Harnstoff-Harzen, Diallyl-Phthalat-Harzen und ungesättigte Polyester-Harzen.

## Revendications

1. Procédé de fabrication d'une fibre de carbone, comprenant : une étape (1) d'immersion d'un matériau composite de fibres de carbone (CFC) dans une solution aqueuse acide à une température dans la plage de 50 °C à 90 °C pour éluer au moins une partie du composant de résine du CFC, pour obtenir ainsi un produit sensiblement fibreux ; et une étape (2) d'agitation du produit sensiblement fibreux obtenu à l'étape (1) dans une solution aqueuse alcaline au moyen d'un agitateur à grande vitesse ou d'un agitateur rotatif alternatif pour éluer au moins une partie du composant de résine du produit sensiblement fibreux, pour obtenir ainsi un produit fibreux.

2. Procédé de fabrication selon la revendication 1, dans lequel la quantité d'élution du composant de résine dans l'étape (1) est située dans la plage de 0,1 à 99,9 lorsque la masse du CFC avant immersion est considérée comme égale à 100.

3. Procédé de fabrication selon la revendication 1 ou 2, dans lequel la quantité d'élution du composant de résine dans l'étape (2) est située dans la plage de 0,1 à 99,9 lorsque la masse du CFC avant immersion est considérée comme égale à 100.

4. Procédé de fabrication selon l'une quelconque des revendications 1 à 3, dans lequel une partie ou la totalité du produit sensiblement fibreux est fibreuse.

5. Procédé de fabrication selon l'une quelconque des revendications 1 à 4, dans lequel le CFC est un préimprégné non durci ou un préimprégné durci.

6. Procédé de fabrication selon l'une quelconque des revendications 1 à 4, dans lequel le CFC est un préimprégné non durci et est immergé dans la solution aqueuse acide jusqu'à ce qu'une partie du préimprégné non durci soit décomposée dans un état fibreux à l'étape (1), pour obtenir ainsi un produit sensiblement fibreux.

7. Procédé de fabrication selon l'une quelconque des revendications 1 à 4, dans lequel le CFC est un préimprégné durci, et est immergé dans la solution aqueuse acide jusqu'à ce que la totalité du préimprégné durci soit décomposée dans un état fibreux à l'étape (1), pour obtenir ainsi un produit sensiblement fibreux.

8. Procédé de fabrication selon l'une quelconque des revendications 1 à 4,
dans lequel le CFC est constitué de préimprégnés non durcis empilés, les préimprégnés non durcis empilés sont soumis à un traitement par immersion dans une solution aqueuse alcaline pendant plusieurs minutes à plusieurs jours, et les préimprégnés traités résultants sont soumis à l'étape (1).

9. Procédé de fabrication selon l'une quelconque des revendications 1 à 8, dans lequel l'agitation à grande vitesse met en oeuvre une agitation dans une plage de turbulence d'un nombre de Reynolds d'au moins 10³, et l'agitation rotative alternative met en oeuvre une agitation dans une plage de turbulence d'un nombre de Reynolds d'au moins 10³.

10. Procédé de fabrication selon l'une quelconque des revendications 1 à 9, comprenant en outre une étape (3) d'immersion du produit fibreux obtenu à l'étape (2) dans une solution aqueuse acide pour éluer davantage un composant de résine et/ou un agent d'encollage déposé sur le produit fibreux, pour obtenir ainsi un produit fibreux amélioré en termes de dispersibilité dans l'eau.

11. Procédé de fabrication selon l'une quelconque des revendications 1 à 10, comprenant en outre une étape (4) de soumission du produit fibreux obtenu à l'étape (3) à une déshydratation et un lavage au moyen d'une solution de lavage alcaline, et d'élimination du composant colorant inclus dans le produit fibreux.

12. Procédé de fabrication d'une composition de résine renforcée de fibres de carbone, comprenant les étapes de : fabrication d'une fibre de carbone par le procédé selon l'une quelconque des revendications 1 à 11 ; et fabrication d'une composition de résine renforcée de fibres de carbone au moyen de la fibre de carbone obtenue.

13. Procédé de fabrication selon la revendication 12, dans lequel la composition de résine renforcée de fibres de carbone est une composition de résine comprenant une fibre de carbone, et une résine thermoplastique et/ou une résine thermodurcissable, la composition de résine renforcée de fibres de carbone comprenant une fibre de carbone (A) en une quantité de 5 à 95 % en masse, et une résine thermoplastique et/ou une résine thermodurcissable (B) en une quantité de 5 à 95 % en masse lorsque la quantité totale de fibre de carbone (A) et de résine thermoplastique et/ou de résine thermodurcissable (B) est considérée comme étant 100 % en masse.

14. Procédé de fabrication selon la revendication 13, dans lequel la résine thermoplastique est au moins l'une choisie dans le groupe constitué de résines à base de polyoléfine, résines à base de polyamide, résines à base de styrène, résines à base de polycarbonate, résines à base de polyester, résines de poly(éther de phénylène), résines de poly(sulfure de phénylène), résines de polyacétal, résines acryliques et résines de chlorure de vinyle.

15. Procédé de fabrication selon la revendication 13, dans lequel la résine thermodurcissable est au moins l'une choisie dans le groupe constitué de résines époxy, résines phénoliques, résines mélamine, résines urée, résines phtalate de diallyle et résines polyester insaturées.
